# EUROPEAN PATENT SPECIFICATION

(11) **EP 2 175 624 B1**
(45) Date of publication and mention of the grant of the patent: **11.01.2017**
(21) Application number: 08860501.9
(22) Date of filing: 21.11.2008
(51) Int. Cl.: H04L 29/06, G06F 9/44, H04M 1/725, H04M 3/42, G06F 9/445

(54) **TERMINAL AND CONFIRMING METHOD FOR OPERATION**
BEENDIGUNGS- UND BESTÄTIGUNGSMETHODE ZUR ABLAUFSTEUERUNG
TERMINAL ET PROCEDE DE CONFIRMATION DE FONCTIONNEMENT

(30) Priority: 27.11.2007 CN 200710178176
(43) Date of publication of application: 14.04.2010
(73) Proprietor: Huawei Technologies Co., Ltd., Longgang District Shenzhen, Guangdong 518129 (CN)
(72) Inventor: WANG, Rui, Shenzhen (CN)
(74) Representative: Kreuz, Georg Maria
(86) International application number: PCT/CN2008/073160
(87) International publication number: WO 2009/074055

(56) References cited:
- CN-A- 1 781 099
- CN-A- 1 949 709
- KR-B1- 100 688 017
- US-A1- 2003 065 749
- US-A1- 2005 153 683
- US-A1- 2007 143 749
- US-A1- 2007 202 874
- US-A1- 2007 204 039
- US-A1- 2007 238 450

## Description

### Field of the Invention

The present invention relates to radio communication, and in particular, to a terminal and an operation confirmation method.

### Background of the Invention

With the development of radio communication applications, terminals are more and more indispensable to the daily life of people, and people imposes higher and higher requirements on the look and feel of terminals. Service Providers (SPs) expect to provide the users with different styles of look-and-feel elements and look-and-feel packages, and enable the users to demonstrate their individualized look and feel of terminals. The SPs expect to manage the look-and-feel elements and the look-and-feel packages of the terminals through the network to benefit both the users and the SPs.

Terminal look and feel refer to the contents displayed to the outside by a terminal, including wallpapers, ring tones, menus, and so on, which are known as look-and-feel elements. The set of such elements is called a look-and-feel package when multiple look-and-feel elements are provided to the terminal simultaneously or when the terminal operates the elements.

The operations performed by a server onto a terminal to manage the look and feel of the terminal include: delivering a look-and-feel package, installing, activating/deactivating, updating, deleting, and locking/unlocking. Delivering refers to sending a look-and-feel package to the user; installing refers to installing the received look-and-feel package on the terminal and generating a series of new look-and-feel elements; activating refers to making a specific look-and-feel package effective on the terminal; updating refers to updating the existing look-and-feel package according to the contents in the received look-and-feel package; deleting refers to deleting a specific look-and-feel package stored on the terminal; and locking refers to locking a look-and-feel package against modification, and unlocking refers to unlocking a locked look-and-feel package.

Taking the look-and-feel installation as an example, the look-and-feel management mode on a terminal is as follows: The user downloads a look-and-feel package from the website of an SP, and installs the downloaded package. In this case, the installation of the look-and-feel package is executed manually by the user, and two scenarios exist. The first scenario is as follows: It takes some time to download the look-and-feel package, but the user does not wait for completion of the downloading. When the terminal finishes downloading the look-and-feel package and needs to install the package, the installation is subject to confirmation of the user. If the user agrees to continue, the terminal continues the installation; otherwise, the terminal gives up the installation. The second scenario is as follows: The user subscribes to a look-and-feel package on the Internet. When a new look-and-feel package is launched on the website of the SP, the website delivers the look-and-feel package to the user actively. However, the installation of the look-and-feel package is subject to confirmation of the user. If the user agrees, the installation of the look-and-feel package goes on; otherwise, the installation aborts. Other operations of managing look and feel, for example, updating, deleting, locking, and locking, are also subject to confirmation of the user.

In the prior art, the user may confirm whether to continue with the operation in many ways, but the essence is: A dialog box is displayed, requesting the user to input the authorization information; the user chooses whether to accept or reject the operation; and the terminal performs the operation according to the selection made by the user. Alternatively, the terminal searches the terminal settings for the authorization information of the user, and performs the corresponding operation according to the obtained authorization information of the user.
when one or more modes of obtaining the user authentication information need to be added, codes for judging obtained user authorization information need to be added, and the codes related to the executing program and the judging program need to be modified massively, thus affecting the stability, maintenance and extension of the codes and affecting the stability of the product quality. For example, on the basis of obtaining the user authorization information through a dialog box, the SP expects to add a mode of obtaining the user authorization information by querying the terminal settings. In this case, the SP has to add the codes about how to obtain the user authorization information by querying the terminal settings into the existing program of the terminal. This involves massive modification to the existing codes, affects the stability and maintenance of the codes, and affects the product quality.

US 2007/204039 A1 describes a system and method of downloading restricted applications to wireless devices and discloses a download server receives a request to download an application from a subordinate wireless device.

US 2005/153683A1 describes plug and play mobile services and discloses that a browser user agent of a terminal is used for sending the access-request signal. The user identification information in the access-request signal can include mobile network code (MNC), device type, device management capability, etc. The Configuration Manager can request the wildcard APN.

US 2007/238540 A1 describes software activation in a mobile terminal.

US 2007/143749A1 describes system and method for expiring modular software components for wireless communication devices and discloses the handset receives an expiration notice. The expiration notice can be received via a wireless communication network and originate from a licensing server communicatively coupled with the handset via the network.

### Summary of the Invention

A terminal and an operation confirmation method are provided in embodiments of the present invention to improve product stability and to avoid massive modification of codes in the case of adding one or more modes of obtaining user authorization information. The embodiments of the present invention are implemented through the following technical solution:
A terminal provided in an embodiment of the present invention includes:
   an operation executing module, adapted to send an operation authorization request; and
   a decision judging module, adapted to: receive the operation authorization request, and obtain user authorization information according to the operation authorization request; send an operation authorization response to the operation executing module in response to the operation authorization request according to the user authorization information.

An operation confirmation method provided in an embodiment of the present invention includes:
receiving, by a decision judging module, an operation authorization request from an operation executing module; and
by the decision judging module, obtaining user authorization information according to the operation authorization request, and sending an operation authorization response to the operation executing module in response to the operation authorization request according to the user authorization information.

The technical solution under the present invention brings these benefits: When the SP needs to add a mode of obtaining user authorization information, the codes do not need to be modified massively, thus making it convenient to maintain and extend codes and improving the stability and reliability of the product.

### Brief Description of the Drawings

FIG. 1 shows a structure of a terminal provided in a first embodiment of the present invention;
FIG. 2 shows a user interface provided in the first embodiment of the present invention; and
FIG. 3 shows a structure of a terminal provided in a second embodiment of the present invention.

### Detailed Description of the Embodiments

To make the technical solution, objectives and merits of the present invention clearer, the following describes the embodiments of the present invention in detail with reference to accompanying drawings.

### Embodiment 1

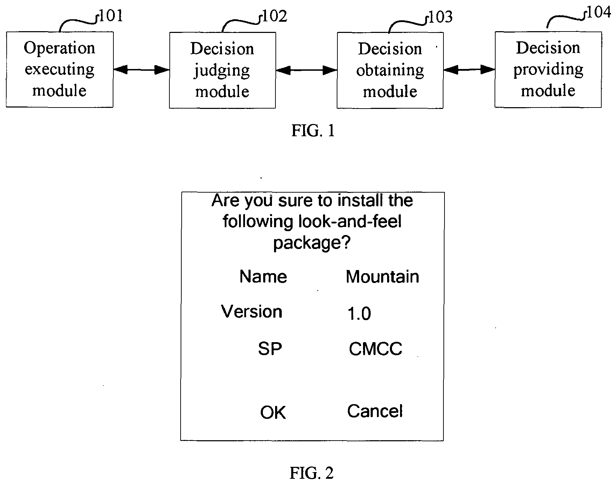

A terminal is provided in the first embodiment of the present invention. As shown in FIG. 1, the terminal includes:
an operation executing module 101, adapted to: send an operation authorization request to a decision judging module 102, receive an operation authorization response from the decision judging module 102, and decide whether to continue the look-and-feel installation according to the received operation authorization response;
the decision judging module 102, adapted to: send an operation authorization request to a decision obtaining module 103, and judge whether the user agrees to install a look-and-feel package according to the received user authorization information; generate an operation authorization response, and send the operation authorization response to the operation executing module 101;
the decision obtaining module 103, adapted to: obtain user authorization information from a decision providing module 104 according to the received operation authorization request, and send the obtained user authorization information to the decision judging module 102; and
the decision providing module 104, adapted to: provide user authorization information, and send the user authorization information to the decision obtaining module 103.

The relations between the modules of the terminal are detailed below.
Step 101: In the process of installing a look-and-feel package, when the operation executing module needs to seek confirmation from the user, the operation executing module sends an operation authorization request to the decision judging module.
   The operation authorization request includes an operation identifier, an installation object, installation time, and size of the installation package. An example of an operation authorization request is given below:

   ```
  <OperationRequest>
          <Category>LFC</Category>
          <Command>Install</Command>
          <CmdID> 15</CmdID>
          <Target>
               <Name>mountain</Name>
               <Version> 100</Version>
               <Provider>CMCC</Provider>
          </Target>
          <Time>20070728T000000Z</Time>
  </OperationRequest>
```

   where "OperationRequest" indicates an operation request; "Category" indicates the operation type, and the operation type here is a look-and-feel management operation; "Install" indicates that the requested operation is installation; "CmdID" indicates the sequence number of the operation, and identifies the request corresponding to the operation; "Target" indicates the target look-and-feel package of the operation (here the name of the package is "mountain", and the version is 1.0, which is provided by CMCC); "20070728T000000Z" means that the operation request occurs at 2007-7-28 0:00.
Step 102: The decision judging module sends the received operation authorization request to the decision obtaining module.
Step 103: After receiving the operation authorization request, the decision obtaining module obtains user authorization information from the decision providing module according to the operation authorization request, and sends the obtained user authorization information to the decision judging module.

The decision obtaining module includes a decision obtaining method recording unit, which records four modes of obtaining the user authorization information. The four modes are: querying the Subscriber Identity Module (SIM) to obtain the stored user authorization information, querying the terminal settings to obtain the user authorization information, displaying a dialog box to obtain the user authorization information, and sending a short message to the specified terminal to obtain the user authorization information. According to the extent of difficulty (from low to high) in obtaining the user authorization information, the four methods are arranged below:
1. Querying the terminal settings to obtain user authorization information;
2. Querying the SIM card to obtain the stored user authorization information;
3. Displaying a dialog box to obtain user authorization information; and
4. Sending a short message to the specified terminal to obtain user authorization information.

According to the extent of reliability (from high to low) in obtaining the user authorization information, the four methods are arranged below:
1. Displaying a dialog box to obtain user authorization information;
2. Sending a short message to the specified terminal to obtain user authorization information;
3. Querying the terminal settings to obtain user authorization information; and
4. Querying the SIM card to obtain the stored user authorization information.

The modes of obtaining user authorization information are not limited to the four modes listed above, and the criteria of arranging the modes are not limited to the two criteria given above. The user may also arrange the modes of obtaining user authorization information to determine the priority order.

In this embodiment, the decision obtaining module obtains the user authorization information in the priority order of difficulty (from low to high) in obtaining the user authorization information. The first mode is to query the terminal settings to obtain the user authorization information. The matching results may be queried through the following parameters:
[Category]=LFC
[Command]=Install
[Provider]=CMCC

If no matching result is obtained according to such parameters, "[Result]=NoMatch" is returned to indicate failure of obtaining the user authorization information.

If the decision obtaining module fails to obtain the user authorization information by querying the terminal, the decision obtaining module chooses to query the SIM to obtain the stored user authorization information. In this case, the decision providing module is a program that reads the SIM card. The decision obtaining module queries the corresponding file in the SIM card. The file records the decision information of the user. If no corresponding file is found, the user authorization information may be obtained through a pop-up dialog box. In this case, the decision providing module is the user interface of the dialog box. FIG. 2 shows a user interface of the dialog box.

In this embodiment, the user selects "OK". After receiving the "OK" decision information of the user, the decision obtaining module returns the decision information to the decision judging module.

Step 104: The decision judging module generates user decision information according to the received user authorization information, generates an operation authorization response according to the user decision information, and sends the operation authorization response to the operation executing module.

An example of an operation authorization response is given below:

```
  <Result>
          <Command>Install</Command>
          <CmdID>15</CmdID>
          <Data>200</Data>
  </Result>
```

The program segment above indicates that the user agrees to install the look-and-feel package.

In this embodiment, because the user selects "OK", the decision judging module determines that the user agrees to install the look-and-feel package.

Step 105: The operation executing module decides whether to execute installation of the look-and-feel package according to the received operation authorization response. If the user agrees, the operation executing module continues to install the look-and-feel package; if the user gives up the installation, the operation executing module aborts.

In this embodiment, because the user agrees to install the package, the look-and-feel installation process goes on.

This embodiment takes the look-and-feel installation as an example, but the look-and-feel management operations are not limited to look-and-feel installation.

In the technical solution under the present invention, the executing codes and the judging codes are implemented in separate modules. When the SP needs to add modes of obtaining user authorization information, the codes do not need to be modified massively, thus making it convenient to maintain and extend codes and improving the stability and extensibility of the product. Moreover, the decision judgment criteria and the judgment results are stored, thus improving the decision speed.

### Embodiment 2

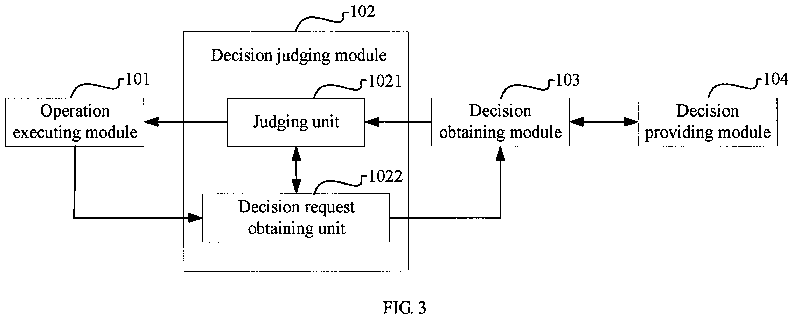

A terminal is provided in this embodiment, as shown in FIG. 3. This embodiment differs from the first embodiment in that: After receiving the operation authorization request, the decision judging module 102 in the terminal judges whether a result matches the operation authorization request. If such a result exists, the decision judging module 102 generates an operation authorization response according to the matching result, and sends the operation authorization response to the operation executing module 101. If no such result exists, the decision judging module 102 sends the operation authorization request to the decision obtaining module 103.

Specifically, the decision judging module 102 includes:
a decision request obtaining unit 1021, adapted to: send the received operation authorization request to a judging unit, and back up the operation authorization request; and send the backup operation authorization request to the decision obtaining module 103 when receiving information indicative of no matching result from the judging unit; and
the judging unit 1022, adapted to: judge whether a result matches the operation authorization request according to the received operation authorization request; if such a result exists, generate an operation authorization response according to the matching result, and send the operation authorization response to the operation executing module 101; if no such result exists, send information indicative of no matching result to the decision request obtaining unit 1021; and further adapted to: generate user decision information according to the received user authorization information, generate an operation authorization response according to the user decision information, and send the operation authorization response to the operation executing module 101.

The decision judging module may further include a decision judgment criteria storing unit, which is adapted to store the decision judgment criteria. The period of storage is rather long. The modes of storing the decision judgment criteria are shown in Table 1.

**Table 1**

| Request Operatior | Authorization Information |
|---|---|
| Installing look-and-feel package | Agree |
| Deleting look-and-feel package | Reject |

After the decision judging module receives an operation authorization request from the operation executing module, the judging unit judges whether a matching result exists in the decision judgment criteria storing unit. If a matching result exists, the judging unit generates an operation authorization response according to the matching result, and sends the operation authorization response to the operation executing module. If no matching result exists, the judging unit sends information indicative of no matching result to the decision request obtaining unit. In this embodiment, the operation authorization request of the operation executing module is a request for installing the Mountain look-and-feel package. The judging unit finds that it is a confirmation request for installing a look-and-feel package, and matching user authorization information (namely, agreeing to install the look-and-feel package) exists in the decision judgment criteria storing unit. In this case, the judging unit determines that the user agrees to install the look-and-feel package according to the matching user authorization information. The judging unit generates an operation authorization response according to the matching result, and sends the operation authorization response to the operation executing module, without obtaining the user authorization information through the decision obtaining module.

Besides, the decision judgment criteria storing unit may directly store the specific judgment result rather than the decision judgment criteria. The storage period is rather long. The judgment result may be the judgment result preset by the manufacturer before shipment. The specific modes of storing the judgment results are shown in Table 2:

**Table 2**

| Request Operation | Judgment Result |
|---|---|
| Installing Mountain look-and-feel package | Agree |
| Deleting Sport look-and-feel package | Reject |

In the process of installing the Mountain V2 look-and-feel package, when the installation program proceeds to the step of seeking confirmation from the user, the judging unit judges whether a matching result exists in the decision judgment criteria storing unit. If a matching result exists, the judging unit generates an operation authorization response according to the matching result, and sends the operation authorization response to the operation executing module. If no matching result exists, the judging unit sends information indicative of no matching result to the decision request obtaining unit. In this embodiment, the judging unit finds a matching result; that is, the user agrees to install the Mountain look-and-feel package. Therefore, the judging unit generates an operation authorization response according to the matching result, and sends the operation authorization response to the operation executing module. The operation executing module decides whether to continue the operation according to the operation authorization response, without asking the user for confirmation. In this way, the judgment steps are shortened, and the process is simplified.

The remaining steps are similar to those of the first embodiment, and are not described further.

In the technical solution under the present invention, the executing codes and the judging codes are implemented in separate modules. When the SP needs to add modes of obtaining user authorization information, the codes do not need to be modified massively, thus making it convenient to maintain and extend codes and improving the stability and extensibility of the product. Moreover, the decision judgment criteria and the judgment results are stored, thus improving the decision speed.

### Embodiment 3

This embodiment differs from the second embodiment in that: The decision request obtaining unit in the decision judging module does not send the received operation authorization request to the judging unit, but sends it to the decision obtaining module directly. The remaining steps are similar to those of the second embodiment, and are not described further.

In the technical solution under the present invention, the executing codes and the judging codes are implemented in separate modules. When the SP needs to add modes of obtaining user authorization information, the codes do not need to be modified massively, thus making it convenient to maintain and extend codes and improving the stability and extensibility of the product. Moreover, the decision judgment criteria and the judgment results are stored, thus improving the decision speed.

### Embodiment 4

In the first embodiment, the decision obtaining method recording unit is in the decision obtaining module, and therefore, the decision obtaining module decides the mode of obtaining the user authorization information. In the fourth embodiment, the decision obtaining method recording unit is in the decision judging module, and therefore, the decision judging module decides the mode of obtaining the user authorization information. For example, four modes of obtaining the user authorization information exist: querying the SIM to obtain the stored user authorization information, querying the terminal settings to obtain the user authorization information, and displaying a dialog box to obtain the user authorization information, and sending a short message to the specified terminal to obtain the user authorization information. The four methods may be arranged in the order of difficulty (from low to high) in obtaining the user authorization information, or arranged in the order of reliability (from high to low) in obtaining the user authorization information. The user may also set the order of arranging the four methods.

In the fourth embodiment, after receiving the operation authorization request, the decision judging module checks the extent of difficulty (from low to high) in obtaining the user authorization information, and decides to select the mode of querying the terminal settings for obtaining the user authorization information. In this case, the decision judging module sends the following information to the decision obtaining module:
[Category]=LFC
[Command]=Install
[Provider]=CMCC

This embodiment differs from the first embodiment in that: The decision judging module does not need to send all of the contents in the operation authorization request to the decision obtaining module, but sends only the part related to the obtaining of the user authorization information, namely, sends only the operation type, operation content, and operation initiator information.

After obtaining the foregoing information, the decision obtaining module obtains the relevant user authorization information from the terminal settings. The remaining steps are similar to those of the first embodiment, and are not described further.

In the technical solution under the present invention, the executing codes and the judging codes are implemented in separate modules. When the SP needs to add modes of obtaining user authorization information, the codes do not need to be modified massively, thus making it convenient to maintain and extend codes and improving the stability and extensibility of the product. Moreover, the decision judgment criteria and the judgment results are stored, thus improving the decision speed.

### Embodiment 5

An operation confirmation method is provided in this embodiment. The method includes:
generating user decision information according to user authorization information when an operation process comes to the step of seeking confirmation from the user; and
generating an operation authorization response according to the user decision information.

Preferably, the method further includes:
deciding whether to continue the operation according to the operation authorization response.

In the technical solution under the present invention, the executing codes and the judging codes are implemented in separate modules. When the SP needs to add modes of obtaining user authorization information, the codes do not need to be modified massively, thus making it convenient to maintain and extend codes and improving the stability and extensibility of the product.

The technical solution under the present invention is applicable to not only the scenario of look-and-feel management, but also the scenario of seeking confirmation from the user in the process of downloading a Multimedia Message Service (MMS) message and other scenarios that require confirmation from the user.

Although the present invention has been described through some exemplary embodiments, the invention is not limited to such embodiments. It is apparent that those skilled in the art can make modifications and variations to the invention.

## Claims

1. A terminal, comprising an operation executing module (101), adapted to send an operation authorization request; **characterized in that**, the terminal further comprises a decision judging module (102), adapted to receive the operation authorization request, and obtain user authorization information according to the operation authorization request; and send an operation authorization response to the operation executing module in response to the operation authorization request according to the user authorization information.

2. The terminal of claim 1, wherein the operation executing module (101), adapted to decide whether to continue according to the received operation authorization response.

3. The terminal of claim 1, further comprising:
a decision obtaining module (103), adapted to obtain the user authorization information, and send the user authorization information to the decision judging module.

4. The terminal of claim 3, wherein the decision judging module (102) comprises:
a first judging unit, adapted to receive the user authorization information from the decision obtaining module (103), generate the operation authorization response according to the user authorization information, and send the operation authorization response to the operation executing module (101).

5. The terminal of claim 3, wherein the decision judging module (102) comprises:
a first decision request obtaining unit (1021), adapted to receive the operation authorization request, back up the operation authorization request, and send the operation authorization request to a second judging unit (1022); and send the backup operation authorization request to the decision obtaining module (103) when receiving information indicative of no matching result from the second judging unit (1022); and
the second judging unit (1022), adapted to receive the operation authorization request, judge whether a judgment result matches the operation authorization request, and send the information indicative of no matching result to the first decision request obtaining unit if no matching result exists; receive the user authorization information from the decision obtaining module (103), generate the operation authorization response according to the user authorization information, and send the operation authorization response to the operation executing module (101).

6. The terminal of claim 5, wherein the decision judging module (102) further comprises:
a decision judgment criteria storing unit, adapted to store decision judgment criteria, wherein:
the decision judgment criteria are used for the second judging unit (1022) to judge whether any result matches the operation authorization request; and, if any matching result exists, the second judging unit (1022) is adapted to generate the operation authorization response according to the matching result, and to send the operation authorization response to the operation executing module (101).

7. The terminal of claim 1, wherein
the decision judging module (102) is adapted to obtain the user authorization information according to a stored priority of obtaining the user authorization information; or, the decision obtaining module (103) is adapted to obtain the user authorization information according to the stored priority of obtaining the user authorization information, and to send the user authorization information to the decision judging module (102).

8. An operation confirmation method in a terminal, comprising:
receiving, by a decision judging module (102), an operation authorization request from an operation executing module (101); **characterized in that**, the method further comprises
obtaining, by the decision judging module, user authorization information according to the operation authorization request, and sending an operation authorization response to the operation executing module in response to the operation authorization request according to the user authorization information.

9. The operation confirmation method of claim 8, further comprising:
deciding, by the operation executing module, whether to continue according to the received operation authorization response.

10. The operation confirmation method of claim 8, wherein:
the process of sending the operation authorization response to the operation executing module (101) in response to the operation authorization request according to the user authorization information comprises:
sending, by the decision judging module (102), the received operation authorization request to a decision obtaining module (103);
by the decision obtaining module, obtaining the user authorization information according to the operation authorization request, and sending the user authorization information to the decision judging module; and
by the decision judging module, generating the operation authorization response according to the user authorization information, and sending the operation authorization response to the operation executing module.

11. The operation confirmation method of claim 8, wherein:
the process of sending the operation authorization response to the operation executing module in response to the operation authorization request according to the user authorization information comprises:
by a decision request obtaining unit, sending the received operation authorization request to a judging unit, and backing up the operation authorization request; and
by the judging unit, judging whether any result matches the operation authorization request; if any matching result exists, generating the operation authorization response according to the matching result, and sending the operation authorization response to the operation executing module; and, if no matching result exists, sending information indicative of no matching result to the decision request obtaining unit; and
by the decision request obtaining unit, receiving the information indicative of no matching result, and sending the backup operation authorization request to a decision obtaining module.

12. The operation confirmation method of claim 8, wherein:
the process of obtaining the user authorization information according to the operation authorization request comprises:
obtaining the user authorization information according to a priority of obtaining the user authorization information.

## Patentansprüche

1. Endgerät, umfassend ein Betriebsausführungsmodul (101), das so ausgelegt ist, dass es eine Betriebsberechtigungsanforderung sendet; **dadurch gekennzeichnet, dass** das Endgerät ferner ein Entscheidungsbeurteilungsmodul (102) umfasst, das so ausgelegt ist, dass es die Betriebsberechtigungsanforderung empfängt und Benutzerberechtigungsinformationen gemäß der Betriebsberechtigungsanforderung einholt; und eine Betriebsberechtigungsantwort in Reaktion auf die Betriebsberechtigungsanforderung gemäß den Benutzerberechtigungsinformationen an das Betriebsausführungsmodul sendet.

2. Endgerät nach Anspruch 1, wobei das Betriebsausführungsmodul (101) so ausgelegt ist, dass es entscheidet, ob es gemäß der empfangenen Betriebsberechtigungsantwort fortfahren soll.

3. Endgerät nach Anspruch 1, ferner umfassend:
ein Entscheidungseinholmodul (103), das so ausgelegt ist, dass es die Benutzerberechtigungsinformationen einholt und die Benutzerberechtigungsinformationen an das Entscheidungsbeurteilungsmodul sendet.

4. Endgerät nach Anspruch 3, wobei das Entscheidungsbeurteilungsmodul (102) umfasst:
eine erste Beurteilungseinheit, die so ausgelegt ist, dass sie die Benutzerberechtigungsinformationen vom Entscheidungseinholmodul (103) empfängt, die Betriebsberechtigungsantwort gemäß den Benutzerberechtigungsinformationen erzeugt und die Betriebsberechtigungsantwort an das Betriebsausführungsmodul (101) sendet.

5. Endgerät nach Anspruch 3, wobei das Entscheidungsbeurteilungsmodul (102) umfasst:
eine erste Entscheidungsanforderungs-Einholeinheit (1021), die so ausgelegt ist, dass sie die Betriebsberechtigungsanforderung empfängt, die Betriebsberechtigungsanforderung sichert und die Betriebsberechtigungsanforderung an eine zweite Beurteilungseinheit (1022) sendet; und die Sicherungs-Betriebsberechtigungsanforderung bei Empfang von Informationen von der zweiten Beurteilungseinheit (1022), die kein übereinstimmendes Ergebnis anzeigen, an das Entscheidungseinholmodul (103) sendet; und
wobei die zweite Beurteilungseinheit (1022) so ausgelegt ist, dass sie die Betriebsberechtigungsanforderung empfängt, beurteilt, ob ein Beurteilungsergebnis mit der Betriebsberechtigungsanforderung übereinstimmt, und die Informationen, die kein übereinstimmendes Ergebnis anzeigen, an die erste Entscheidungsanforderungs-Einholeinheit sendet, wenn kein übereinstimmendes Ergebnis vorliegt; die Benutzerberechtigungsinformationen vom Entscheidungseinholmodul (103) empfängt, die Betriebsberechtigungsantwort gemäß den Benutzerberechtigungsinformationen erzeugt und die Betriebsberechtigungsantwort an das Betriebsausführungsmodul (101) sendet.

6. Endgerät nach Anspruch 5, wobei das Entscheidungsbeurteilungsmodul (102) ferner umfasst:
eine Entscheidungsbeurteilungskriterien-Speichereinheit, die so ausgelegt ist, dass sie Entscheidungsbeurteilungskriterien speichert, wobei:
die Entscheidungsbeurteilungskriterien verwendet werden, damit die zweite Beurteilungseinheit (1022) beurteilt, ob ein Ergebnis mit der Betriebsberechtigungsanforderung übereinstimmt; und die zweite Beurteilungseinheit (1022) so ausgelegt ist, dass sie, wenn ein übereinstimmendes Ergebnis vorliegt, die Betriebsberechtigungsantwort gemäß dem übereinstimmenden Ergebnis erzeugt und die Betriebsberechtigungsantwort an das Betriebsausführungsmodul (101) sendet.

7. Endgerät nach Anspruch 1, wobei
das Entscheidungsbeurteilungsmodul (102) so ausgelegt ist, dass es die Benutzerberechtigungsinformationen gemäß einer gespeicherten Priorität zum Einholen der Benutzerberechtigungsinformationen einholt; oder das Entscheidungseinholmodul (103) so ausgelegt ist, dass es die Benutzerberechtigungsinformationen gemäß der gespeicherten Priorität zum Einholen der Benutzerberechtigungsinformationen einholt und die Benutzerberechtigungsinformationen an das Entscheidungsbeurteilungsmodul (102) sendet.

8. Betriebsbestätigungsverfahren in einem Endgerät, umfassend:
Empfangen, durch ein Entscheidungsbeurteilungsmodul (102), einer Betriebsberechtigungsanforderung von einem Betriebsausführungsmodul (101),
**dadurch gekennzeichnet, dass** das Verfahren ferner umfasst:
Einholen, durch das Entscheidungsbeurteilungsmodul, von Benutzerberechtigungsinformationen gemäß der Betriebsberechtigungsanforderung und Senden einer Betriebsberechtigungsantwort in Reaktion auf die Betriebsberechtigungsanforderung gemäß den Benutzerberechtigungsinformationen an das Betriebsausführungsmodul.

9. Betriebsbestätigungsverfahren nach Anspruch 8, ferner umfassend:
Entscheiden, durch das Betriebsausführungsmodul, ob gemäß der empfangenen Betriebsberechtigungsantwort fortzufahren ist.

10. Betriebsbestätigungsverfahren nach Anspruch 8, wobei:
der Prozess des Sendens der Betriebsberechtigungsantwort an das Betriebsausführungsmodul (101) in Reaktion auf die Betriebsberechtigungsanforderung gemäß den Benutzerberechtigungsinformationen umfasst:
Senden, durch das Entscheidungsbeurteilungsmodul (102), der empfangenen Betriebsberechtigungsanforderung an ein Entscheidungseinholmodul (103), Einholen, durch das Entscheidungseinholmodul, der Benutzerberechtigungsinformationen gemäß der Betriebsberechtigungsanforderung und Senden der Benutzerberechtigungsinformationen an das Entscheidungsbeurteilungsmodul; und
Erzeugen, durch das Entscheidungsbeurteilungsmodul, der Betriebsberechtigungsantwort gemäß den Benutzerberechtigungsinformationen und Senden der Betriebsberechtigungsantwort an das Betriebsausführungsmodul.

11. Betriebsbestätigungsverfahren nach Anspruch 8, wobei:
der Prozess des Sendens der Betriebsberechtigungsantwort an das Betriebsausführungsmodul in Reaktion auf die Betriebsberechtigungsanforderung gemäß den Benutzerberechtigungsinformationen umfasst:
Senden, durch eine Entscheidungsanforderungs-Einholeinheit, der empfangenen Betriebsberechtigungsanforderung an eine Beurteilungseinheit und Sichern der Betriebsberechtigungsanforderung; und
Beurteilen, durch die Beurteilungseinheit, ob ein Ergebnis mit der Betriebsberechtigungsanforderung übereinstimmt; Erzeugen, wenn ein übereinstimmendes Ergebnis vorliegt, der Betriebsberechtigungsantwort gemäß dem übereinstimmenden Ergebnis und Senden der Betriebsberechtigungsantwort an das Betriebsausführungsmodul; und Senden, wenn kein übereinstimmendes Ergebnis vorliegt, von Informationen, die kein übereinstimmendes Ergebnis anzeigen, an die Entscheidungsanforderungs-Einholeinheit; und
Empfangen, durch die Entscheidungsanforderungs-Einholeinheit, der Informationen, die kein übereinstimmendes Ergebnis anzeigen, und Senden der Sicherungs-Betriebsberechtigungsanforderung an ein Entscheidungseinholmodul.

12. Betriebsbestätigungsverfahren nach Anspruch 8, wobei:
der Prozess des Einholens der Benutzerberechtigungsinformationen gemäß der Betriebsberechtigungsanforderung umfasst:
Einholen der Benutzerberechtigungsinformationen gemäß einer Priorität zum Einholen der Benutzerberechtigungsinformationen.

## Revendications

1. Terminal, comprenant un module d'exécution d'opération (101), adapté pour envoyer une demande d'autorisation d'opération ; **caractérisé en ce que** le terminal comprend en outre un module d'estimation de décision (102), adapté pour recevoir la demande d'autorisation d'opération, et obtenir des informations d'autorisation d'utilisateur en fonction de la demande d'autorisation d'opération ; et envoyer une réponse d'autorisation d'opération au module d'exécution d'opération en réponse à la demande d'autorisation d'opération en fonction des informations d'autorisation d'utilisateur.

2. Terminal selon la revendication 1, dans lequel le module d'exécution d'opération (101), adapté pour décider s'il faut ou non continuer en fonction de la réponse d'autorisation d'opération reçue.

3. Terminal selon la revendication 1, comprenant en outre :
un module d'obtention de décision (103), adapté pour obtenir les informations d'autorisation d'utilisateur, et envoyer les informations d'autorisation d'utilisateur au module d'estimation de décision.

4. Terminal selon la revendication 3, dans lequel le module d'estimation de décision (102) comprend :
une première unité d'estimation, adaptée pour recevoir les informations d'autorisation d'utilisateur en provenance du module d'obtention de décision (103), générer la réponse d'autorisation d'opération en fonction des informations d'autorisation d'utilisateur, et envoyer la réponse d'autorisation d'opération au module d'exécution d'opération (101).

5. Terminal selon la revendication 3, dans lequel le module d'estimation de décision (102) comprend :
une première unité d'obtention de demande de décision (1021), adaptée pour recevoir la demande d'autorisation d'opération, faire une copie de secours de la demande d'autorisation d'opération, et envoyer la demande d'autorisation d'opération à une deuxième unité d'estimation (1022) ; et envoyer la demande d'autorisation d'opération de secours au module d'obtention de décision (103) lors de la réception d'informations indiquant qu'il n'y a aucun résultat concordant en provenance de la deuxième unité d'estimation (1022) ; et
la deuxième unité d'estimation (1022), adaptée pour recevoir la demande d'autorisation d'opération, estimer si un résultat d'estimation concorde avec la demande d'autorisation d'opération, et envoyer les informations indiquant qu'il n'y a aucun résultat concordant à la première unité d'obtention de demande de décision s'il n'existe aucun résultat concordant ; recevoir les informations d'autorisation d'utilisateur en provenance du module d'obtention de décision (103), générer la réponse d'autorisation d'opération en fonction des informations d'autorisation d'utilisateur, et envoyer la réponse d'autorisation d'opération au module d'exécution d'opération (101).

6. Terminal selon la revendication 5, dans lequel le module d'estimation de décision (102) comprend en outre :
une unité de stockage de critères d'estimation de décision, adaptée pour stocker des critères d'estimation de décision, où :
les critères d'estimation de décision sont utilisés pour l'estimation par la deuxième unité d'estimation (1022) du fait qu'il existe ou non un quelconque résultat concordant avec la demande d'autorisation d'opération ; et, s'il existe un quelconque résultat concordant, la deuxième unité d'estimation (1022) est adaptée pour générer la réponse d'autorisation d'opération en fonction du résultat concordant, et pour envoyer la réponse d'autorisation d'opération au module d'exécution d'opération (101).

7. Terminal selon la revendication 1, dans lequel
le module d'estimation de décision (102) est adapté pour obtenir les informations d'autorisation d'utilisateur en fonction d'une priorité stockée d'obtention des informations d'autorisation d'utilisateur ; ou, le module d'obtention de décision (103) est adapté pour obtenir les informations d'autorisation d'utilisateur en fonction de la priorité stockée d'obtention des informations d'autorisation d'utilisateur, et pour envoyer les informations d'autorisation d'utilisateur au module d'estimation de décision (102).

8. Procédé de confirmation d'opération dans un terminal, comprenant :
la réception, par un module d'estimation de décision (102), d'une demande d'autorisation d'opération en provenance d'un module d'exécution d'opération (101), **caractérisé en ce que** le procédé comprend en outre
l'obtention, par le module d'estimation de décision, d'informations d'autorisation d'utilisateur en fonction de la demande d'autorisation d'opération, et l'envoi d'une réponse d'autorisation d'opération au module d'exécution d'opération en réponse à la demande d'autorisation d'opération en fonction des informations d'autorisation d'utilisateur.

9. Procédé de confirmation d'opération selon la revendication 8, comprenant en outre :
la décision, par le module d'exécution d'opération, du fait qu'il faut ou non continuer en fonction de la réponse d'autorisation d'opération reçue.

10. Procédé de confirmation d'opération selon la revendication 8, dans lequel :
le processus d'envoi de la réponse d'autorisation d'opération au module d'exécution d'opération (101) en réponse à la demande d'autorisation d'opération en fonction des informations d'autorisation d'utilisateur comprend :
l'envoi, par le module d'estimation de décision (102), de la demande d'autorisation d'opération reçue à un module d'obtention de décision (103),
par le module d'obtention de décision, l'obtention des informations d'autorisation d'utilisateur en fonction de la demande d'autorisation d'opération, et l'envoi des informations d'autorisation d'utilisateur au module d'estimation de décision ; et
par le module d'estimation de décision, la génération de la réponse d'autorisation d'opération en fonction des informations d'autorisation d'utilisateur, et l'envoi de la réponse d'autorisation d'opération au module d'exécution d'opération.

11. Procédé de confirmation d'opération selon la revendication 8, dans lequel :
le processus d'envoi de la réponse d'autorisation d'opération au module d'exécution d'opération en réponse à la demande d'autorisation d'opération en fonction des informations d'autorisation d'utilisateur comprend :
par une unité d'obtention de demande de décision, l'envoi de la demande d'autorisation d'opération reçue à une unité d'estimation, et la réalisation d'une copie de secours de la demande d'autorisation d'opération ; et
par l'unité d'estimation, l'estimation du fait qu'il existe ou non un quelconque résultat concordant avec la demande d'autorisation d'opération ; s'il existe un quelconque résultat concordant, la génération de la réponse d'autorisation d'opération en fonction du résultat concordant, et l'envoi de la réponse d'autorisation d'opération au module d'exécution d'opération ; et, s'il n'existe aucun résultat concordant, l'envoi d'informations indiquant qu'il n'y a aucun résultat concordant à l'unité d'obtention de demande de décision ; et
par l'unité d'obtention de demande de décision, la réception des informations indiquant qu'il n'y a aucun résultat concordant, et l'envoi de la demande d'autorisation d'opération de secours à un module d'obtention de décision.

12. Procédé de confirmation d'opération selon la revendication 8, dans lequel le processus d'obtention des informations d'autorisation d'utilisateur en fonction de la demande d'autorisation d'opération comprend :
l'obtention des informations d'autorisation d'utilisateur en fonction d'une priorité d'obtention des informations d'autorisation d'utilisateur.
